# EUROPÄISCHE PATENTSCHRIFT

(11) **EP 2 165 792 B1**
(45) Veröffentlichungstag und Bekanntmachung des Hinweises auf die Patenterteilung: **04.09.2013**
(21) Anmeldenummer: 09009921.9
(22) Anmeldetag: 31.07.2009
(51) Int. Cl.: B23C 3/12, B27D 5/00

(54) **Anordnung und Verfahren zum Beseitigen eines Langspans von einem Werkstück**
Assembly and method for removing a longitudinal splinter from a workpiece
Agencement et procédé d'élimination d'un copeau longitudinal d'une pièce usinée

(30) Priorität: 22.09.2008 DE 102008048295
(43) Veröffentlichungstag der Anmeldung: 24.03.2010
(73) Patentinhaber: Rauch Möbelwerke GmbH, 97896 Freudenberg (DE)
(72) Erfinder: Hlinka, Jürgen, 97877 Wertheim (DE); Kappes, Heiko, 97903 Collenberg (DE); Frankenberger, Stefan, 63897 Miltenberg (DE)
(74) Vertreter: Schmid, Nils T.F.

(56) Entgegenhaltungen:
- EP-A1- 1 588 811
- DE-A1- 4 217 589
- DE-A1- 19 521 155

## Beschreibung

Die Erfindung betrifft eine Anordnung und ein Verfahren zum Beseitigen eines Fliesspans oder Langspans von einem plattenförmigen Werkstück, das beispielsweise aus Massivholz-, Hartfaserplattenwerkstoff, wie MDF, gefertigt sein kann. Auch bei Spanplatten, Wabenplatten und sogenannte OSB-Platten können während deren Bearbeitung Langspäne (Fliesspäne) erzeugt werden, welche erfindungsgemäß beseitigt werden sollen. Der Oberbegriff der Ansprüche 1 und 2 basiert auf der DE 4 217 589.

Bei der Fertigung von Werkstückplatten wird in einem ersten Bearbeitungsstück die Werkstoffplatte insbesondere auf Breitenmaß geschnitten. Anschließend werden auf Kanten mit Kunststoffblenden (Umleimer) geklebt. Auch Blenden aus Papier, Holz oder anderen Extruderwerkstoffen können herangezogen werden. Üblicherweise werden die Blenden an den Plattenschmalseiten der Werkstückplatte geleimt, wobei auch andere formschlüssige Befestigungsverfahren herangezogen werden können.

Anschließend werden die Eckkanten der Blende auf Höhe bearbeitet. Schließlich werden die Kanten der Blende profiliert, insbesondere mit einer Profilfräsung und einer Ziehklinge. In einem Endbearbeitungsschritt werden die Kanten der Blende profilfein bearbeitet.

Die Werkstückplatten durchlaufen bekanntermaßen eine automatisierte Fertigungslinie mit Fördergeschwindigkeit von bis zu 100 m/min. Der Transport und die Bearbeitung der Werkstückplatten erfolgen kontinuierlich bei einer Lücke zwischen den Werkstückplatten von etwa 40 bis 80 cm. Insbesondere bei der Profilkonturfeinbearbeitung der Werkstückplatte entsteht ein fadenartiger Lang- oder Fließspan, der aufgrund der Trägheit des Materials nicht vollständig von der Werkstückplatte abgeschnitten werden kann.

Im Verlauf des Förderwegs der Werkstückplatte bleibt dieser Langspan an den Förder- und Bearbeitungsaggregaten hängen, wo er auch abreißt und sich beim weiteren Vorschub der Werkstückplatte an Maschinenbauteilen der Förderrichtung oder der Bearbeitungsaggregate verfangen kann. Häufig werden die Längspäne an Maschinenbauteilen umwickelt und dringen in Wälzlager und Dichtungselemente ein, wodurch Maschinenschäden auftreten können, die insbesondere zum Stillstand der Fertigungsmaschine führen können.

Zum Entfernen der störenden Spanfäden ist es bekannt, ein sogenanntes Entfernungsaggregat einzusetzen, dass den Restfaden mit einer Schere abschneidet. In dem Bereich der Schere ist eine Absaugeinrichtung zum Entsorgen des Fadens vorgesehen. Eine derartige Anordnung aus Absaugeinrichtung und Abtrennvorrichtung ist beispielsweise aus DE 199 44 728 Al bekannt.

Bei den bekannten Entfernungsaggregaten ist es allerdings notwendig, den Förderfluss wenigstens durch Reduzierung der Fördergeschwindigkeit zu unterbrechen. Die Kantenbeseitigung kann bisher nur bei geringen Geschwindigkeiten von 30 m/min realisiert werden. Auf diese Weise sind die Produktionslinien auf Werkstückvorschubgeschwindigkeit von 30 m/min begrenzt. Allerdings besteht bei den bekannten Entfernungsaggregaten nur eine geringe Prozesssicherheit dahingehend, dass tatsächlich der Langspan von dem Werkstück abgetrennt ist.

Es ist Aufgabe der Erfindung, eine Anordnung und ein Verfahren zum Beseitigen eines Langspans von einem insbesondere plattenartigen Werkstück aus Kunststoff, Holz oder dergleichen bereitzustellen, mit dem die Nachteile des Stands der Technik überwunden werden, insbesondere eine möglichst prozesssichere Beseitigung, insbesondere Abtrennung, des Langspans ermöglicht wird, ohne die Fördergeschwindigkeit der Werkstückplatten reduzieren zu müssen.

Diese Aufgabe wird durch die Merkmale von Patentanspruch 1 gelöst.

Danach ist eine gattungsgemäße Anordnung zur Beseitigung eines Langspans oder Fliesspans von einem Werkstück aus Kunststoff, Holz oder dergleichen, die eine Abtrennvorrichtung des Langspans von dem Werkstück aufweist, durch eine Blaseinrichtung weitergebildet, deren pneumatische Strömung derart zur Abtrennvorrichtung ausgerichtet ist, so dass beim Passieren des Werkstücks an der Blaseinrichtung der Langspan zur Abtrennvorrichtung hin gedrückt und abgeschnitten wird. Bei der erfindungsgemäßen Maßnahme zeigte sich überraschenderweise, dass es ausreicht, den Langspan hin zur Schneide der Abtrennvorrichtung mit Hilfe einer pneumatischen Strömung zu leiten, um ausreichende Andruck- oder Anpresskräfte gegen die Schneide zu erzeugen, welche des Abschneiden des Werkstücks erzwingen. Die erfindungsgemäße Blaseinrichtung ermöglicht, den Langspan von dem Werkstück zu beseitigen, ohne die Fördergeschwindigkeit des plattenartigen Werkstücks senken zu müssen, geschweige denn die Förderung unterbrechen zu müssen. Vielmehr können mit der Integration einer Blaseinrichtung, die den Langspan auf die Abtrennvorrichtung zu bläst, Fördergeschwindigkeiten von 80 bis 100 m/min oder sogar schneller ohne Weiteres für die Werkstücke erreicht werden. Erfindungsgemäß wird somit die Durchsetzeffektivität von herkömmlichen Werkstückplatten-Bearbeitungsfertigungslinien deutlich erhöht.

Bei einer bevorzugten Ausführung der Erfindung ist der Langspan ohne eine mechanische, den Langspan in Eingriff nehmende Führung nur durch die Blaseinrichtung in Kontakt mit der Abtrennvorrichtung gebracht. Die Anordnung ist also frei von jeglicher Eingriffseinrichtung, die physikalisch auf den Langspan zugreift, außer der die Abtrennung durchführenden Abtrennvorrichtung. Vorzugsweise ist die Abtrennvorrichtung und die Blaseinrichtung gegenüber dem durch die Förderbahn insbesondere kontinuierlich bewegten Werkstück ortsfest angeordnet. Lediglich die Werkstückplatte bewegt sich relativ zu der Abtrennvorrichtung und der Blaseinrichtung und insbesondere einer Absaugeinrichtung.

Beispielsweise kann die Abtrennvorrichtung ein Messer, eine Schere oder einen Scherkopf aufweisen. Besonders geeignet für eine Abtrennvorrichtung erweist sich das allgemeine Funktionsprinzip von Schermaschinen, die zum Scheren von Schafen eingesetzt werde. Auch Friseurscherköpfe können Verwendung finden. Derartige Schermaschinen haben einen Scherkopf mit zwei parallelen zueinander beweglichen Scherplatten. Jede der Scherplatten hat mehrere parallel nebeneinander angeordnete Zinken, welche mit den Zinken der anderen Scherplatte die beispielsweise gewünschte Scherbewegung durchführt. Derartige Schermaschinen haben sich deswegen für den Einsatz in Werkstückplatten-Bearbeitungslinien als geeignet erwiesen, weil die Zinken der Scherköpfe die leichten Langspäne fangen und ergreifen und definiert abschneiden können. Ein Beispiel für eine geeignete Schermaschine ist die Constana3® des Unternehmens Euro Farm zu nennen. Der Antrieb des bekannten Schafsscherkopfs ist allerdings im Hinblick auf die Fertigungsanforderung der feuergefährdeten Betriebsstätten der holzverarbeitenden Industrie anzupassen.

Insbesondere eine zusätzliche Scherkopfmesserölung ist vorzusehen. Des Weiteren ist die Schermaschine an eine Gesamtmaschinensteuerung anzuschließen, welche den Scherkopf für den entsprechenden Scherprozess aktiviert und deaktiviert.

Vorzugsweise ist ein Messer der Abtrenneinrichtung zum Ausführen einer oszillierenden Bewegung in Längsrichtung des Messers gelagert. Dabei kann die Schneide in einem Winkel von über 30°, vorzugsweise im Wesentlichen senkrecht, zur Strömungsrichtung der pneumatischen Strömung der Blaseinrichtung liegen.

Bei einer Weiterbildung der Erfindung hat der Scherkopf wenigstens zwei übereinanderliegende, zueinander beweglich gelagerte Schermesser, vorzugsweise Schermesserplatten. Ein Schermesser kann wenigstens zwei Zinken aufweisen, wobei eine Vielzahl von Zinken von 10 bis 20 vorteilhaft ist. Die Zinken können sich von einer Basis weg und im Wesentlichen entgegen der pneumatischen Strömung erstrecken, so dass die Langspane durch die Strömung zwischen die wenigstens zwei Zinken der Abtrennvorrichtungen gelangen können.

Bei einer bevorzugten Ausführung der Erfindung hat die Blaseinrichtung eine Strömungsausrichteinrichtung, die insbesondere durch eine optimierte Blasdüse, beispielsweise ein langgestrecktes Rohr, gebildet ist.

Bei einer bevorzugten Weiterbildung der Erfindung ist die Abtrennvorrichtung im Wesentlichen unterhalb einer Fördereinrichtung oder Förderauflage für das Werkstück angeordnet. Vorzugsweise ist die Blaseinrichtung oberhalb der Fördereinrichtung oder Förderauflage für das Werkstück angeordnet.

Bei einer bevorzugten Ausführung der Erfindung ist benachbart der Abtrennvorrichtung eine Absaugeinrichtung angeordnet, deren Eingangsmündung im Wesentlichen in der Strömungsverlängerung zur Blaseinrichtung liegt.

Des Weiteren betrifft der Erfindung ein Verfahren zum Beseitigen eines Langspans von einem Werkstück, insbesondere einer Werkstückplatte, aus Kunststoff, Holz oder dergleichen, wobei der Langspan von dem Werkstück abgetrennt oder abgeschnitten wird. Erfindungsgemäß wird der Langspan auf die Abtrennvorrichtung zu geblasen.

Das Werkstück kann sich kontinuierlich insbesondere bei einer Geschwindigkeit von bis zu 80 m/min oder 100 m/min oder mehr bewegen. Dabei kann beim Passieren des Werkstücks an einer Blaseinrichtung der Langspan über eine pneumatische Strömung hin zur Abtrennvorrichtung gedrückt und abgeschnitten werden.

Vorzugsweise wird eine Fördergeschwindigkeit des Werkstücks für das Abtrennen des Langspans nicht geändert, insbesondere reduziert, sondern bleibt im Wesentlichen konstant.

Bei einer bevorzugten Ausführung der Erfindung wird beim Passieren des Werkstücks an der Abtrennvorrichtung die Blaseinrichtung aktiviert und nach dem Abtrennvorgang die Blaseinrichtung deaktiviert.

Es sei klar, dass das erfindungsgemäße Verfahren entsprechend der Funktionsweise der erfindungsgemäßen Anordnung und umgekehrt ausgeführt sein kann.

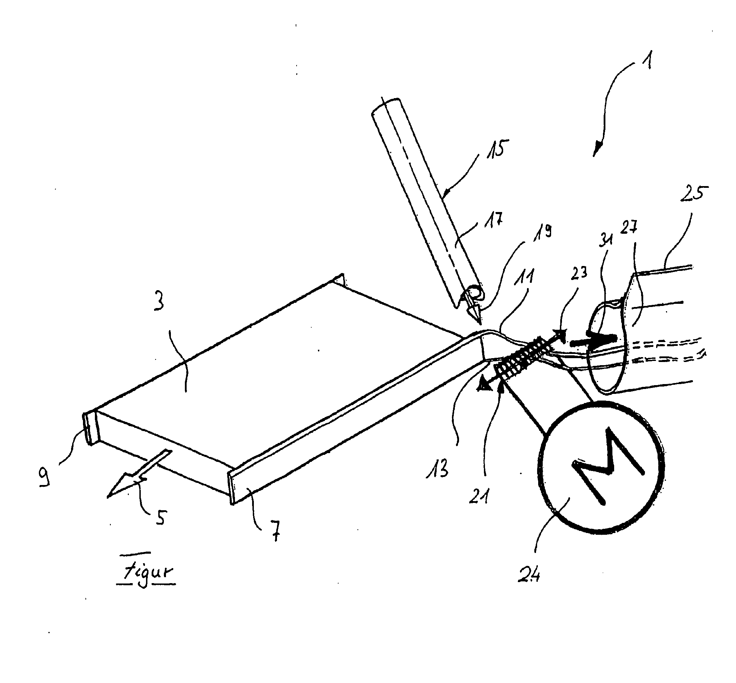

Weitere Eigenschaften, Vorteile und Merkmale der Erfindung werden durch die folgende Beschreibung einer bevorzugten Ausführung der Erfindung anhand der beiliegenden Zeichnung deutlich, in der eine Figur eine erfindungsgemäße Anordnung zur Beseitigung eines Langspans von einer Werkstückplatte zeigt.

In der Figur ist die erfindungsgemäße Anordnung zum Beseitigen eines Langspans von einem Werkstück im Allgemeinen mir der Bezugsziffer 1 versehen.

Eine Werkstückplatte 3 aus Holz wird entlang eines Förderwegs 5 bei einer Geschwindigkeit von 80 m/min bis 100 m/min oder schneller gefördert.

An dem Längsrand der Werkstückplatte 3 sind Kunststoffblenden 7, 9 geklebt, die mit Hilfe einer nicht dargestellten Zielklinge profilfein bearbeitet sind, indem randseitig eine Fase gebildet ist.

Stromabwärts der Förderrichtung verbleiben zwei lange, dünne Restspanfäden 11, 13 die aufgrund der Trägheit ihres Materials bezüglich der Ziehklinge an der Werkstückplatte 3, insbesondere an den jeweiligen Blenden 7, 9 hängen bleiben.

Die erfindungsgemäße Anordnung 1 soll nun die Restspanfäden 11, 13 abschneiden und entsorgen.

Die erfindungsgemäße Anordnung 1 umfasst eine Blaseinrichtung 15, die ein Ausrichtrohr 17 umfasst, das sich von oben über der Werkstückplatte 3 hin zum Längsrand erstreckt. Die Blaseinrichtung 15 hat eine nicht dargestellte pneumatische Strömungserzeugungseinrichtung, welche eine pneumatische Strömung durch das Ausrichtrohr 17 hervorruft, was durch den Pfeil 19 angedeutet sein soll.

Dem Ausrichtrohr 17 der Blaseinrichtung 15 ist ein Scherkopf 21 zugeordnet, der sich oszillierend bewegt, was durch den Doppelpfeil 23 angedeutet ist.

Die Strömung der Blaseinrichtung 15 ist auf den Scherkopf 21 ausgerichtet, so dass im Wesentlichen die Strömungsmitte eine Schneide des Scherkopfs 21 geometrisch schneidet. Vorzugsweise steht die Schneide des Scherkopfs 21 im Wesentlichen senkrecht zur Strömungsrichtung der pneumatischen Strömung der Blaseinrichtung 15.

Der Scherkopf 21 umfasst zwei nebeneinander liegende Scherplatten mit mehreren Zinken, welche in der Figur nur angedeutet sind.

Der Scherkopf 21 ist durch einen pneumatischen oder hydraulischen Antrieb 24 betrieben.

Stromabwärts des Scherkopfs 21 ist eine Absaugeinrichtung 25 angeordnet, die ein Aufnahmerohr 27 aufweist. Die Absaugeinrichtung 25 erzeugt einen Unterdruck, insbesondere ein Vakuum, welche die abgeschnittenen Restspanfäden 11, 13 von der Werkstückplatte 3 weg entsorgt, was durch den Pfeil 31 angedeutet ist.

Im Betrieb wird sowohl der Scherkopf 21 als auch die Blaseinrichtung 25 durch eine nicht dargestellte Steuerungs- und/oder Regelungseinrichtung aktiviert/deaktiviert. Dabei können beispielsweise Lichtschranken verwendet werden, die das Einfahren und Ausfahren einer Werkstückplatte 3 sensieren.

Im aktivierten Zustand bläst die Blaseinrichtung 15 die Restspanfäden 11, 13 auf den Scherkopf 21 zu. Aufgrund der Zinken am Scherkopf werden die Restspanfäden 11, 13 mehr oder weniger eingefangen und ergriffen. Die Kombination aus Strömungsdruck und Zinken sowie der oszillierenden Bewegung des Scherkopfs 21 bewirkt ein Schnitt an den Restspanfäden 11, 13 und diese werden ohne Weiteres abgeschnitten und unmittelbar durch das Absaugen der Absaugeinrichtung 25 von der Fertigungslinie entfernt.

Die in der vorstehenden Beschreibung, den Figuren und den Ansprüchen offenbarten Merkmale können sowohl einzeln als auch in beliebiger Kombination tür die Realisierung der Erfindung in den verschiedenen Ausgestaltungen von Bedeutung sein.

### Bezugszeichenliste

- 1: Anordnung
- 3: Werkstückplatte
- 5: Förderweg
- 7, 9: Kunststoffblenden
- 11, 13: Restspanfäden
- 15: Blaseinrichtung
- 17: Ausrichtrohr
- 19: Strömung
- 21: Scherkopf
- 23: Doppelpfeil
- 24: Antrieb
- 25: Absaugeinrichtung
- 27: Aufnahmerohr
- 31: Absaugströmungsrichtung

## Patentansprüche

1. Anordnung zum Beseitigen eines Langspans von einem Werkstück aus Kunststoff, Holz oder dergleichen, umfassend eine Abtrennvorrichtung zum Trennen des Langspans von dem Werkstück, **gekennzeichnet durch** eine Blaseinrichtung (15), deren pneumatische Strömung derart zur Abtrennvorrichtung ausgerichtet ist, dass beim Passieren des Werkstücks an der Blaseinrichtung (15) der Langspan hin zur Abtrennvorrichtung gedrückt und abgeschnitten wird.

2. Anordnung nach Anspruch 1, **dadurch gekennzeichnet, dass** der Langspan ohne eine mechanische, den Langspan in Eingriff nehmende Führung nur durch die Blaseinrichtung (15) in Kontakt mit der Abtrennvorrichtung gebracht ist.

3. Anordnung nach Anspruch 1 oder 2, **dadurch gekennzeichnet, dass** die Abtrennvorrichtung und die Blaseinrichtung (15) gegenüber dem durch eine Fördereinrichtung insbesondere kontinuierlich bewegten Werkstück ortsfest angeordnet sind.

4. Anordnung nach einem der vorstehenden Ansprüche, dadurch **gekenn - zeichnet,** dass die Abtrennvorrichtung ein Messer, eine Schere oder ein Scherkopf (21) aufweist, wobei insbesondere das Messer zum Ausführen einer oszillierenden Bewegung in Längsrichtung einer Schneide des Messers gelagert ist.

5. Anordnung nach Anspruch 4, **dadurch gekennzeichnet, dass** die Schneide in einem Winkel von über 30°, vorzugsweise im Wesentlichen senkrecht, zur Strömungsrichtung der pneumatischen Strömung liegt.

6. Anordnung nach Anspruch 4, **dadurch gekennzeichnet, dass** der Scherkopf (21) wenigstens zwei übereinander liegende, zueinander beweglich gelagerte Schermesser aufweist.

7. Anordnung nach Anspruch 4 oder 6, **dadurch gekennzeichnet, dass** ein Schermesser wenigstens zwei Zinken aufweist, die sich von einer Basis weg und im Wesentlichen entgegen die pneumatische Strömung erstrecken, so dass der Langspan durch die Strömung zwischen die wenigstens zwei Zinken gelangt.

8. Anordnung nach einem der vorstehenden Ansprüche, dadurch **gekenn - zeichnet,** dass die Blaseinrichtung (15) eine Strömungsausrichteinrichtung aufweist, die insbesondere durch ein lang gestrecktes Rohr (17) gebildet ist.

9. Anordnung nach einem der vorstehenden Ansprüche, **dadurch gekennzeichnet, dass** die Blaseinrichtung (15) im Wesentlichen oberhalb einer Förderauflage für das Werkstück angeordnet ist.

10. Anordnung nach einem der vorstehenden Ansprüche, **dadurch gekennzeichnet, dass** die Abtrennvorrichtung im Wesentlichen unterhalb eines Förderbands für das Werkstück angeordnet ist.

11. Anordnung nach einem der vorstehenden Ansprüche, dadurch **gekenn - zeichnet,** dass benachbart der Abtrennvorrichtung eine Absaugeinrichtung (25) angeordnet ist, deren Eingangsmündung im wesentlichen in Strömungsverlängerung zur Blaseinrichtung (15) liegt.

12. Verfahren zum Beseitigen eines Langspans von einem Werkstück aus Kunststoff, Holz oder dergleichen, wobei der Langspan von dem Werkstück durch eine Abtrennvorrichtung abgetrennt wird **dadurch gekennzeichnet, dass** der Langspan auf die Abtrennvorrichtung zu geblasen wird.

13. Verfahren nach Anspruch 12, **dadurch gekennzeichnet, dass** sich das Werkstück kontinuierlich insbesondere bei einer Geschwindigkeit von bis zu 100 m/min bewegt wird und dass beim Passieren des Werkstücks an einer Blaseinrichtung (15) der Langspan durch eine pneumatische Strömung hin zur Abtrennvorrichtung gedrückt und abgeschnitten wird.

14. Verfahren nach Anspruch 12 oder 13, **dadurch gekennzeichnet, dass** eine Fördergeschwindigkeit des Werkstücks für das Abtrennen des Langspans nicht geändert, insbesondere reduziert, wird.

15. Verfahren nach einem der vorstehenden Ansprüche 12 bis 14, **dadurch gekennzeichnet, dass** beim Passieren des Werkstücks an der Abtrennvorrichtung die Blaseinrichtung (15) aktiviert wird und nach dem Abtrennvorgang die Blaseinrichtung (15) deaktiviert wird.

## Claims

1. An arrangement for removing a long chip from a workpiece made of plastic, wood or the like, comprising a separating device for separating the long chip from the workpiece, **characterized by** a blower device (15), the pneumatic flow of which is aligned with the separating device in such a manner that the long chip is pressed toward the separating device and is cut off when the workpiece passes along the blower device (15).

2. The arrangement according to claim 1, **characterized in that** the long chip is brought into contact with the separating device only through the blower device (15) without using a mechanical guide engaging with the long chip.

3. The arrangement according to claim 1 or claim 2, **characterized in that** the separating device and the blower device (15) are arranged stationarily with respect to the workpiece that is in particular continuously moved by a conveying device.

4. The arrangement according to any one of the preceding claims, **characterized in that** the separating device has a blade, a pair of scissors or a shaving head (21), wherein in particular the blade is mounted in the longitudinal direction of a cutting edge of the blade so as to carry out an oscillating movement.

5. The arrangement according to claim 4, **characterized in that** the cutting edge lies at an angle of greater than 30°, preferably substantially perpendicular, to the flow direction of the pneumatic flow.

6. The arrangement according to claim 4, **characterized in that** the shaving head (21) has at least two shaving blades that lie on top of one another and are movable relative to one another.

7. The arrangement according to claim 4 or claim 6, **characterized in that** a shaving blade has at least two prongs that extend away from a basis and substantially against the pneumatic flow so that due to said flow, the long chip gets between the at least two prongs.

8. The arrangement according to any one of the preceding claims, **characterized in that** the blower device (15) has a flow alignment device which is in particular formed by an elongated tube (17).

9. The arrangement according to any one of the preceding claims, **characterized in that** the blower device (15) is arranged substantially above a conveyor support for the workpiece.

10. The arrangement according to any one of the preceding claims, **characterized in that** the separating device is arranged substantially below a conveyor belt for the workpiece.

11. The arrangement according to any one of the preceding claims, **characterized in that** adjacent to the separating device, a suction device (25) is arranged, the intake opening of which lies substantially in flow extension to the blower device (15).

12. A method for removing a long chip from a workpiece made of plastic, wood or the like, wherein the long chip is separated from the workpiece by a separating device, **characterized in that** the long chip is blown toward the separating device.

13. The method according to claim 12, **characterized in that** the workpiece is moved continuously in particular at a speed of up to 100 m/min, and that the long chip is pressed by a pneumatic flow toward the separating device and is cut off when the workpiece passes along a blower device (15).

14. The method according to the claims 12 or 13, **characterized in that** a conveying speed of the workpiece for separating the long chip is not changed, in particular not reduced.

15. The method according to any one of the preceding claims 12 to 14, **characterized in that** the blower device (15) is activated when the workpiece passes along the separating device, and the blower device (15) is deactivated after the separating process.

## Revendications

1. Agencement pour éliminer un copeau longitudinal d'une pièce de plastique, de bois ou similaire, comprenant un dispositif de séparation pour séparer le copeau longitudinal de la pièce, **caractérisé par** un dispositif de soufflage (15) dont l'écoulement pneumatique est ainsi dirigé vers le dispositif de séparation que lorsque la pièce passe devant le dispositif de soufflage (15), le copeau longitudinal est pressé en direction du dispositif de séparation puis est coupé.

2. Agencement selon la revendication 1, **caractérisé en ce que** le copeau longitudinal est mis en contact avec le dispositif de séparation uniquement par le dispositif de soufflage (15), sans guidage mécanique mettant en prise le copeau longitudinal.

3. Agencement selon la revendication 1 ou 2, **caractérisé en ce que** le dispositif de séparation et le dispositif de soufflage (15) sont disposés fixement par rapport à la pièce déplacée en particulier en continu par un dispositif de transport.

4. Agencement selon l'une des revendications précédentes, **caractérisé en ce que** le dispositif de séparation présente un couteau, une cisaille ou une tête de cisaille (21), sachant qu'en particulier, le couteau est disposé pour exécuter un mouvement oscillant dans le sens longitudinal d'un tranchant du couteau.

5. Agencement selon la revendication 4, **caractérisé en ce que** le tranchant est compris dans un angle de plus de 30°, de préférence essentiellement vertical, par rapport au sens d'écoulement de l'écoulement pneumatique.

6. Agencement selon la revendication 4, **caractérisé en ce que** la tête de cisaille (21) présente au moins deux lames de cisaille reposant l'une au-dessus de l'autre et disposées en étant mobiles l'une par rapport à l'autre.

7. Agencement selon la revendication 4 ou 6, **caractérisé en ce qu'**une lame de cisaille présente au moins deux dents qui partent d'une base et s'étendent essentiellement à l'encontre de l'écoulement pneumatique, de sorte que le copeau longitudinal parvient entre les au moins deux dents par l'écoulement.

8. Agencement selon l'une des revendications précédentes, **caractérisé en ce que** le dispositif de soufflage (15) présente un dispositif d'alignement d'écoulement qui est formé essentiellement par un tube (17) étiré en longueur.

9. Agencement selon l'une des revendications précédentes, **caractérisé en ce que** le dispositif de soufflage (15) est disposé essentiellement au-dessus d'un appui de transport pour la pièce.

10. Agencement selon l'une des revendications précédentes, **caractérisé en ce que** le dispositif de séparation est disposé essentiellement en-dessous d'un tapis de transport pour la pièce.

11. Agencement selon l'une des revendications précédentes, **caractérisé en ce qu'**un dispositif d'extraction (25) est disposé adjacent au dispositif de séparation, l'embouchure d'entrée duquel se trouvant essentiellement dans le prolongement d'écoulement en direction du dispositif de soufflage (15).

12. Procédé pour éliminer un copeau longitudinal d'une pièce de plastique, de bois ou similaire, dans lequel le copeau longitudinal est séparé de la pièce par un dispositif de séparation, **caractérisé en ce que** le copeau longitudinal est soufflé en direction du dispositif de séparation.

13. Procédé selon la revendication 12, **caractérisé en ce que** la pièce est déplacée en continu en particulier à une vitesse allant jusqu'à 100 m/min et que lorsque la pièce passe devant un dispositif de soufflage (15), le copeau longitudinal est pressé par un écoulement pneumatique en direction du dispositif de séparation puis est coupé.

14. Procédé selon les revendications 12 ou 13, **caractérisé en ce qu'**une vitesse de transport de la pièce n'est pas modifiée, en particulier réduite, pour séparer le copeau longitudinal.

15. Procédé selon l'une des revendications précédentes 12 à 14, **caractérisé en ce que** lorsque la pièce passe devant le dispositif de séparation, le dispositif de soufflage (15) est activé et après la séparation, le dispositif de soufflage (15) est désactivé.
